# EUROPEAN PATENT APPLICATION

(11) **EP 1 783 884 A1**
(43) Date of publication of application: **09.05.2007**
(21) Application number: 05256890.4
(22) Date of filing: 07.11.2005
(51) Int. Cl.: H02K 21/24, B60K 7/00

(54) **Multi-phase A.C. vehicle motor**

(71) Applicant: Silicon Valley Micro M Corporation, San Jose, California 95119 (US)
(72) Inventor: Zhu, Shengbo, San Jose, California 95120 (US); Huang, Su Shiong, Bellevue, Washington 98004 (US)
(74) Representative: Pluckrose, Anthony William

(57) **Abstract**

A multi-phase A.C. vehicle motor having one or more disk rotor assemblies (20) and pairs of stator sub-assemblies (30L, 30R). Each disk rotor assembly has a disk (21) and a plurality of permanent magnets (25i) distributed along one or more circular paths in the disk inboard of the peripheral edge of the rotor. Each stator sub-assembly has a corresponding number of pole pieces (34Li; 34Ri) and coils (35Li, 35Ri) distributed along a mounting plate in corresponding circular paths. The disk (21) is rotatably mounted to a support member; while the stator sub-assemblies are fixed to the support member.

## Description

This invention relates to multi-phase A.C. motors used for the propulsion of vehicles. More particularly, this invention relates to a multi-phase A.C. vehicle propulsion motor with a compact design and improved torque.

Multi-phase A.C. vehicle propulsion motors are known and have been used for the propulsion of many different types of vehicles, such as bicycles, motorcycles, autos, and small trucks. A typical motor design has a rotor and a stator. The rotor is fixedly attached to the vehicle wheel for rotation therewith and carries a plurality of permanent magnets mounted about the circumference of the rotor in a predetermined magnetic orientation. The stator is fixedly mounted to the vehicle frame and carries a plurality of electromagnets distributed in close proximity to the rotor permanent magnets. The coils of the electromagnets are coupled to a multi-phase A.C driving circuit, usually in a three-phase or Wye arrangement. Electrical power for the driving circuit is supplied by a D.C. power source, such as a lead-acid battery, and a D.C. to A.C. converter circuit for converting the D.C. electrical power from the battery to A.C. electrical power. A manually operable control circuit allows the frequency of the A.C. driving circuit to be varied, which causes the rotor to be driven at different rotational speeds by the alternating and rotating magnetic fields produced by the electromagnets. Examples of known multi-phase A.C. vehicle propulsion motors are shown in U.S. Patent Numbers 6,100,615; 6,276,475 and 6,617,746, and U.S. Patent Application Publication Number US 2002/0135220 A1, the disclosures of which are hereby incorporated by reference.

Some known multi-phase A.C. vehicle propulsion motors use a hollow cylindrical stator and an annular rotor positioned within the stator. Other motors use a solid cylindrical inner stator and an outer annular rotor. Both design types suffer from the disadvantage that the permanent magnets of the rotor must be positioned along the circumference of the stator (either the outer circumference in the first type, or the inner circumference in the second type) in order to interact strongly with the varying magnetic field produced by the stator coils. Thus, for a given set of physical dimensions, the number of permanent magnets mounted on the rotor-and the torque produced by the motor- is limited to the amount of surface space available on the circumferential surface of the rotor. This unduly limits the performance of known multi-phase A.C. vehicle propulsion motors.

### SUMMARY OF THE INVENTION

The invention comprises a multi-phase A.C. vehicle propulsion motor which is devoid of the limitations noted above in known motor designs, and which is capable of generating substantially more torque than known multi-phase A.C. vehicle propulsion motors having the same overall physical dimensions.

In the broadest aspect, the invention comprises a multi-phase A.C. vehicle motor comprising a rotor disk having a peripheral edge and a plurality of permanent magnets distributed along an essentially circular path, the path being located inwardly of the peripheral edge; and a pair of stator sub-assemblies positioned in flanking relation to the rotor disk. Each of the stator sub-assemblies has a mounting plate, a plurality of pole pieces distributed on the mounting plate along an essentially circular path, and a plurality of coils each arranged about a corresponding one of the plurality of pole pieces.

The plurality of permanent magnets can be distributed along two or more substantially circular paths in the rotor disk; and the plurality of pole pieces and coils in each of the stator subassemblies can be distributed along the mounting plate in a corresponding manner to the plurality of permanent magnets.

The invention can be configured as a single rotor disk with one pair of stator sub-assemblies; and as a plurality of rotor disks and pairs of stator sub-assemblies mutually spaced in a lateral direction.

The vehicle motor is preferably mounted on a support member for the vehicle motor, and at least one bearing element is provided for rotatably supporting the rotor disk on the support member. Each mounting plate is secured to the support member to prevent rotation of each of the stator sub-assemblies on the support member.

The invention further preferably includes a motor enclosure having a pair of laterally spaced end walls and an enclosure wall extending between the end walls for enclosing the rotor disk and the stator sub-assemblies, with the rotor disk being attached to the enclosure. The end walls of the motor enclosure are rotatably supported on the support member by a plurality of bearing elements so that the motor enclosure rotates with the rotor disk.

The invention has wide application to a variety of vehicles, such as an automobile, a bicycle, a motorcycle, and the like. Disk motor assemblies fabricated according to the teachings of the invention are capable of generating substantially more torque for a given size motor than conventional motors, due to the substantially greater number of magnetic components which can be mounted within a motor housing of a given size. In addition, the invention enables a multi-phase A.C. motor to be constructed having a much smaller size than conventional motors of this type while providing the same torque output. Further, the design of the invention is substantially simpler than conventional multi-phase A.C. propulsion motors. Still further, the invention can be readily tailored to meet the propulsion needs of any given application by varying the number of magnetic elements per circular path, varying the number of circular paths, and varying the number of disk rotor assemblies and stator assemblies incorporated into the motor housing.

For a fuller understanding of the nature and advantages of the invention, reference should be made to the ensuing detailed description taken in conjunction with the accompanying drawings.

### BRIEF DESCRIPTION OF THE DRAWINGS

FIG. 1 is a sectional view of a first embodiment of the invention;
FIG. 2 is a front plan view of the rotor disk of the embodiment of Fig. 1;
FIG. 3 is a sectional view taken along lines 3-3 of Fig. 2;
FIG. 4 is a front plan view of one of the two stators of the embodiment of Fig. 1;
Fig. 5 is an enlarged sectional view taken along lines 5-5 of Fig. 4;
FIG. 6 is a simplified wiring diagram illustrating the A.C. power connections to the stator coils;
Fig. 7 is a sectional view of an alternate embodiment of the invention;
Fig. 8 is a sectional view of another alternate embodiment of the invention;
Fig. 9 is a schematic sectional view of the embodiment of Fig. 7 adapted for an automobile wheel;
Fig. 10 is a schematic sectional view of the embodiment of Fig. 7 adapted for use with a spoked wheel; and
Fig. 11 is a sectional view similar to Fig. 3 illustrating an alternate mounting arrangement for the permanent magnets.

### DETAILED DESCRIPTION OF THE PREFERRED EMBODIMENTS

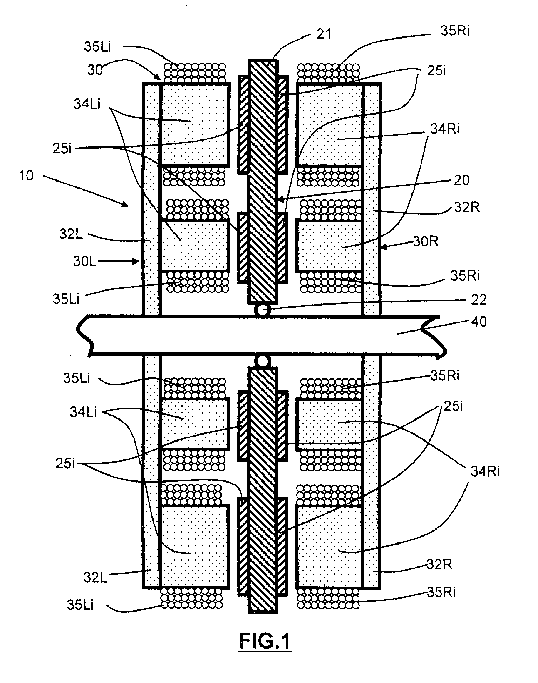

Turning now to the drawings, Fig. 1 is a sectional view of a first embodiment of the invention. As seen in this Fig., a disk motor assembly generally designated with reference numeral 10 includes a disk rotor assembly 20 and a stator assembly 30. Disk rotor assembly 20 comprises a central disk member 21 rotatably mounted by means of a standard low friction bearing 22 to a mounting shaft 40. Shaft 40 is secured to the frame of a vehicle (not shown) and serves as the mounting support for disk motor assembly 10. Shaft 40 may comprise an axle stub of an automobile, for example. Secured to opposing faces of disk member 21 are a plurality of permanent magnets 25i. Disk member 21 is fabricated from a nonmagnetic material, such as Delrin, Nylon, aluminum, or any other relatively stiff nonmagnetic material. Permanent magnets 25i are secured to the faces of disk member 21 using any one of a number of known techniques, such as adhesive bonding with a secure bonding adhesive (e.g. an epoxy resin adhesive); thermal bonding; welding; or the equivalent.

Stator assembly 30 comprises two substantially identical sub-assemblies 30L and 30R. Each sub-assembly comprises a mounting plate 32L, 32R, a plurality of pole pieces 34Li, 34Ri, and a plurality of coils 35Li, 35Ri each arranged about the outer circumference of an associated pole piece 34Li, 34Ri. Pole pieces 34Li, 34Ri are fabricated from a suitable magnetically susceptible material, preferably silicon steel, and are secured to their respective mounting plates 32L, 32R using any suitable bonding technique such as a strong adhesive, welding, or the like. Mounting plates 32L, 32R are fixedly secured to shaft 40 so that the stator assembly 30 does not move on shaft 40.

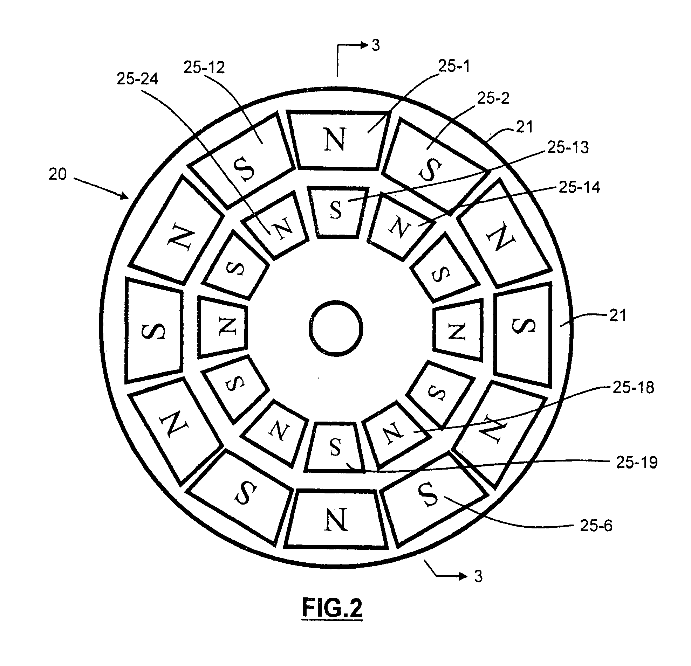

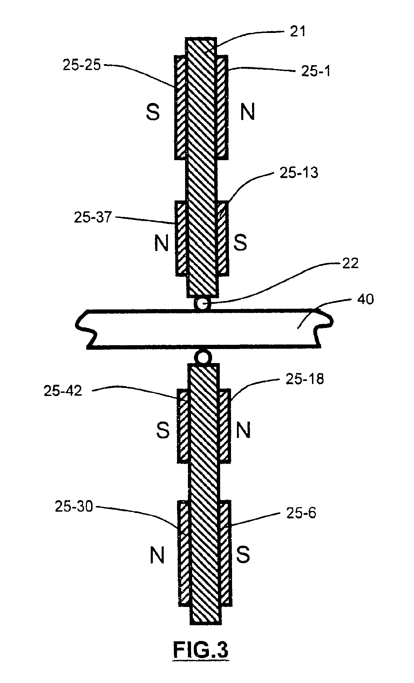

As best seen in Figs. 2 and 3, permanent magnets 25i are arranged about the two major opposing surfaces of disk member 21 in circular patterns. In the embodiment of Figs. 1-5 two concentric circular rows of permanent magnets 25i are disposed on each major surface of disk member 21. The permanent magnets 25i in each row on one surface of disk member 21 are physically arranged so that adjacent magnets in each row have magnetic orientation of opposite polarity. In addition, magnets 25i mounted on opposite sides of disk member 21 in mutual registration have magnetic orientations of additive polarity. Still further, adjacent magnets 25i in the different rows on the same surface of disk member 21 are also arranged to have magnetic orientations of opposite polarity. For example, adjacent magnets 25-12, 25-1, and 25-2 in the outer row on disk member 21 have South (S)-North (N)-South (S) magnetic orientations (see Fig. 2). Magnets 25-1 and 25-25 in the outer rows on opposite sides of disk member 21 have additive N-S magnetic orientations (see Fig. 3). Magnet 25-1 in the outer row of disk member 21 and magnet 25-13 in the inner row on the same side of disk member 21 have N-S magnetic orientations.

The magnetic orientations shown in Figs. 2 and 3 for magnets 25i and labeled either N or S denote the polarity of the magnetic field at the outer surface of each magnet 25i. To illustrate, Fig. 3 shows magnet 25-1 with an N orientation; and magnet 25-25 with an S orientation. For magnet 25-1, the N signifies that the outer surface of magnet 25-1 is the North pole of the magnet, while the South pole of magnet 25-1 is at the inner surface which confronts the outer surface of disk member 21. Similarly, for magnet 25-25, the S signifies that the outer surface of magnet 25-25 is the South pole of the magnet, while the North pole of magnet 25-25 is at the inner surface which confronts the outer surface of disk member 21. Thus, these two magnets are arranged in a magnetically additive manner.

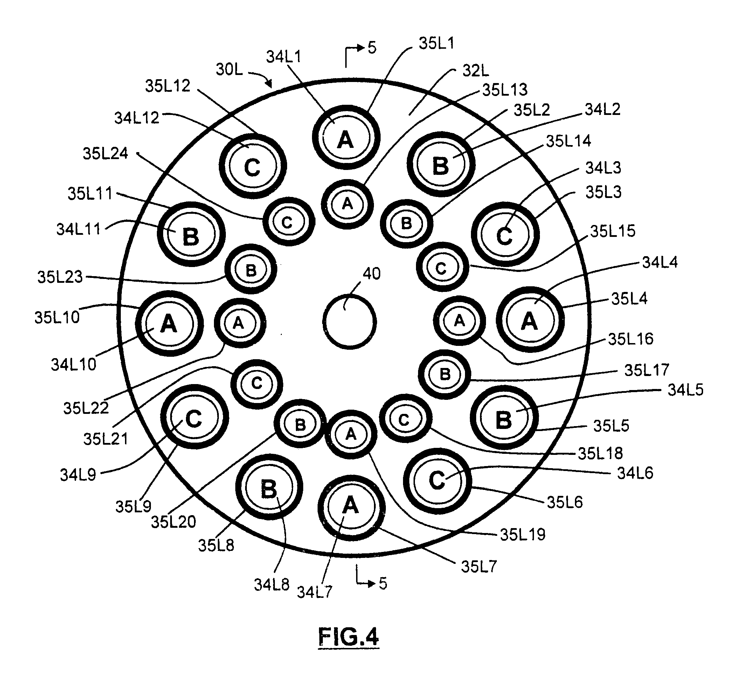

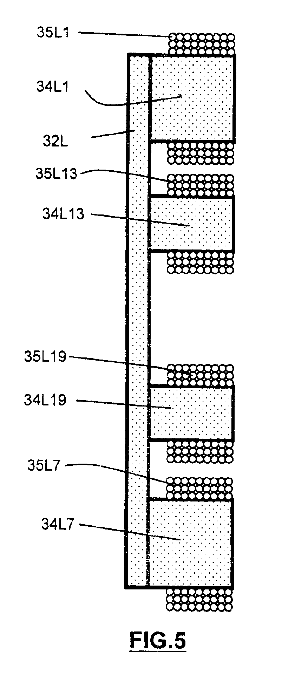

Figs. 4 and 5 illustrate the physical arrangement of the pole pieces 34Li and coils 35Li for the left stator sub-assembly 30L. The right stator sub-assembly has an identical physical layout. As seen in this Fig., pole pieces 34Li are distributed on the surface of mounting plate 32L in two concentric circles to match the distribution of magnets 25i on the rotor disk 21. In the preferred embodiment, the number of pole pieces 34Li and the number of coils 35Li is equal to the number of magnets 25i on the facing side of rotor disk 21. The same is true for the number of pole pieces 34Ri and the number of coils 35Ri of the right stator sub-assembly 30R.

As best seen in Fig. 4, the coils 35Li are grouped into three groups for purposes of electrical connection: group A, group B, and group C. For example, in the outer circle coils 35L1, 35L4, 35L7, and 35L10 are group A coils; coils 35L2, 35L5, 35L8, and 35L11 are group B coils; and coils 35L3, 35L6, 35L9, and 35L12 are group C coils. In the inner circle, coils 35L13, 35L16, 35L19, and 35L22 are group A coils; coils 35L14, 35L17, 35L20, and 35L23 are group B coils; and coils 35L15, 35L18, 35L21, and 35L24 are group C coils. The coils 35Ri of the right stator sub-assembly 30R are similarly grouped.

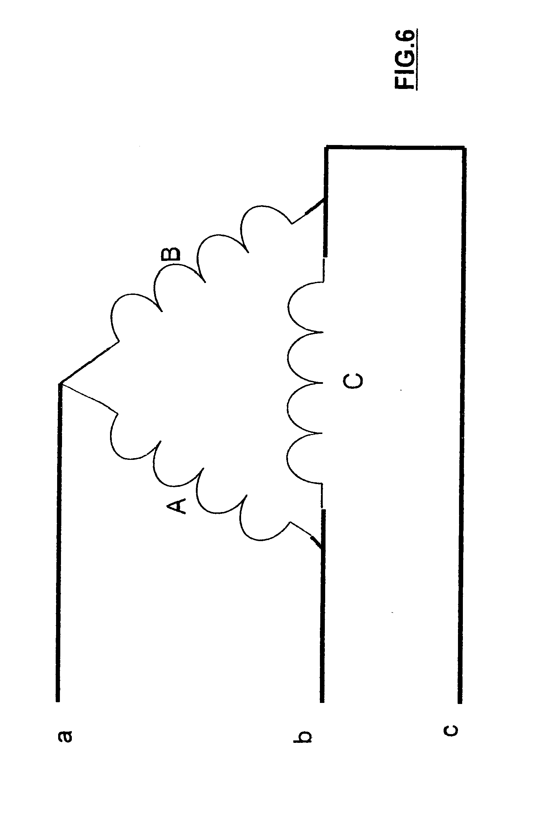

Fig. 6 illustrates the A.C. three phase electrical connections to the coil groups. The coils 35Li, 35Ri in group A are connected between input terminals a and b; the coils 35Li, 35Ri in group B are connected between input terminals a and c; and the coils 35Li, 35Ri in group C are connected between input terminals b and c. When operated in the three phase mode illustrated in Fig. 6, the angular velocity of the rotor disk is varied by changing the frequency of the A.C. input driving voltage. This can be done with conventional circuitry known to those of ordinary skill in the art.

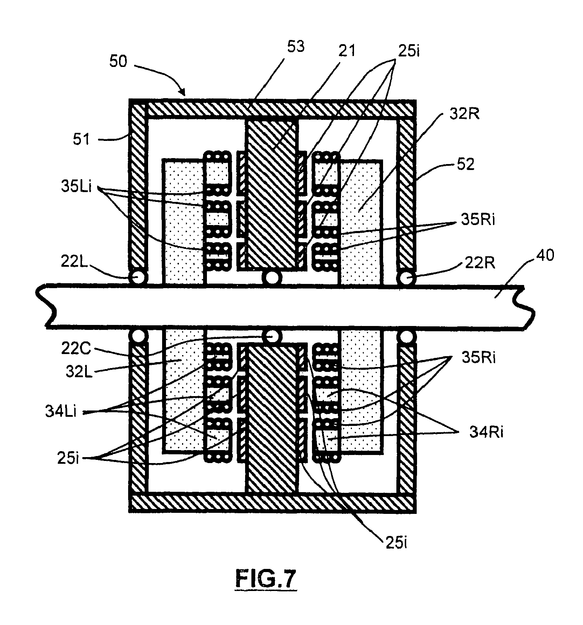

Fig. 7 is a sectional view of a hub disk motor using a single rotor disk 21. As seen in this Fig., rotor disk 21 is secured to a housing 50 having a pair of end plates 51, 52, and a wall enclosure 53 connected to end plates 51, 52. Rotor disk 21 is rotatably coupled to support shaft 40 by means of a low friction bearing 22C. Similarly, end plates 51, 52 are rotatably coupled to shaft 40 by means of low friction bearings 22L, 22R, respectively. Stator mounting plates 32L, 32R are firmly secured to shaft 40 to prevent rotation of the stator sub-assemblies. In this embodiment, additional magnets 25i, pole pieces 34i, and coils 35i are provided in a third circular path. This provides additional torque over the two circular path embodiment described above.

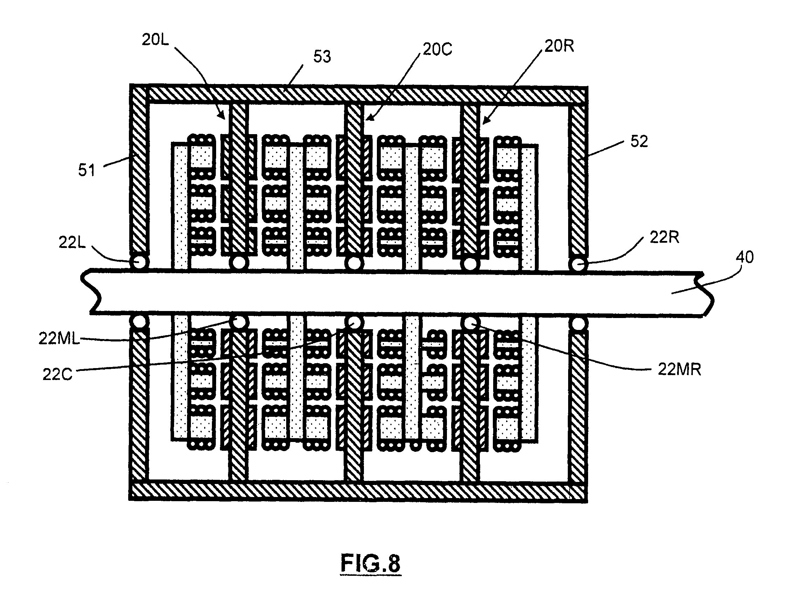

Fig. 8 is a sectional view of an alternate embodiment of the invention having three disk rotor assemblies 20L, 20C, and 20R; and three corresponding stator assemblies 30L, 30C, and 30R. Each of the disk rotor and stator assemblies is identical to that described above with reference to Figs. 1-7. This embodiment provides substantial additional torque for the motor. In this embodiment, end plates 51, 52 are rotatably mounted on support shaft 40 using low friction bearings 22L, 22R; rotor disks 21L, 21C, and 21R are rotatably mounted on shaft 40 using low friction bearings 22ML, 22C, and 22MR; and all of the stator mounting plates 32i are firmly secured to shaft 40 to prevent rotation of the stator assemblies 30i.

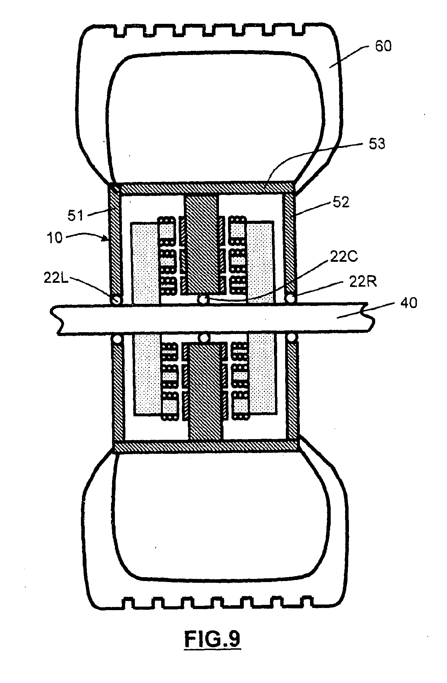

Fig. 9 is a sectional view of the Fig. 7 embodiment adapted for use as a driving motor for the wheel of an automobile having a pneumatic tire 60. As seen in this Fig., disk motor 10 is positioned concentrically of tire 60 and provides the propulsion force for the wheel. Wall enclosure 53 can form an integral part of the rim of a wheel. Alternatively, wall enclosure may be attached to the wheel in concentric fashion.

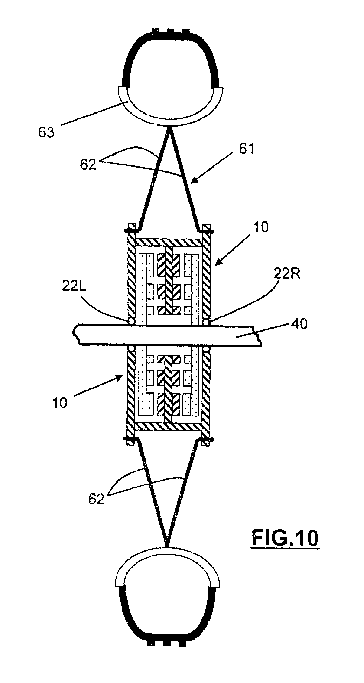

Fig. 10 is a sectional view similar to Fig. 9, but illustrating the application of the invention to a spoked wheel 61, such as one used on bicycles and motorcycles. As seen in this Fig., wheel 61 has a plurality of individual spokes 62 connected between a rim 63 and the disk motor housing 50. Disk motor assembly 10 is concentrically mounted with respect to the wheel 61, and may form the wheel hub. Shaft 40 can be connected to the fork of the cycle.

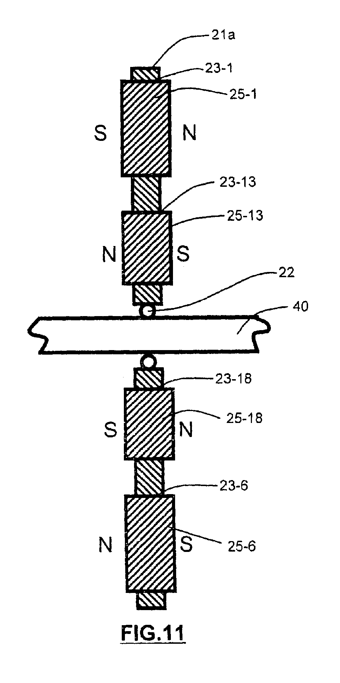

Instead of providing separate permanent magnets positioned on opposite surfaces of the rotor disk, the rotor disk may be provided with magnet apertures and a single magnet having a thickness greater than the thickness of the rotor disk may be installed in a given aperture with each pole surface of the magnet extending out of the plane of the facing surface of the rotor disk. Fig. 11 illustrates this alternate embodiment. As seen in this Fig., modified rotor disk 21a has a plurality of apertures 23i formed therein. Apertures 23i have the same geometrical shape as the permanent magnets to be installed therein. For example, for the trapezoidal-shaped magnets 25i illustrated in Fig. 2, the apertures 23i have a corresponding trapezoidal shape. In this embodiment, magnets 25i have a thickness greater than the thickness of rotor disk 21a so that each magnet 25i extends outwardly of the surfaces of disk 21a by a preselected amount. This arrangement substantially reduces the total number of individual magnets needed and simplifies the magnet alignment procedure.

As will now be apparent, disk motor assemblies fabricated according to the teachings of the invention are capable of generating substantially more torque for a given size motor than conventional motors, due to the substantially greater number of magnetic components which can be mounted within a motor housing of a given size. In addition, the invention enables a multi-phase A.C. motor to be constructed having a much smaller size than conventional motors of this type while providing the same torque output. Further, the design of the invention is substantially simpler than conventional multi-phase A.C. propulsion motors. Still further, the invention can be readily tailored to meet the propulsion needs of any given application by varying the number of magnetic elements per circular path, varying the number of circular paths, and varying the number of disk rotor assemblies and stator assemblies incorporated into the motor housing. Thus, the invention has wide application to a variety of vehicles, including but not limited to automobiles, trucks, bicycles, and motorcycles.

While the invention has been described with reference to particular embodiments, various modifications, alternate constructions and equivalents may be employed without departing from the spirit of the invention. For example, while the embodiments illustrated and described use two and three concentric circular magnetic element paths, other configurations may be employed using only one circular path or more than three circular paths. In addition, the number of disk rotor assemblies and stator assemblies incorporated into the motor housing may be expanded beyond three, as desired. Therefore, the above should not be construed as limiting the invention, which is defined by the appended claims.

## Claims

1. A multi-phase A.C. vehicle motor comprising:
a rotor disk having a peripheral edge and a plurality of permanent magnets distributed along an essentially circular path, said path being located inwardly of said peripheral edge; and
a pair of stator sub-assemblies positioned in flanking relation to said rotor disk, each of said stator sub-assemblies having a mounting plate, a plurality of pole pieces distributed on said mounting plate along an essentially circular path, and a plurality of coils each arranged about a corresponding one of said plurality of pole pieces.

2. The invention of claim 1 wherein adjacent magnets along said essentially circular path are arranged with opposite magnetic polarities.

3. The invention of claim 1 wherein said rotor disk has a surface; and wherein said permanent magnets are adhered to said surface.

4. The invention of claim 1 wherein said disk has a plurality of through apertures formed therein; and wherein said permanent magnets are mounted in associated ones of said plurality of through apertures.

5. The invention of claim 1 wherein said plurality of permanent magnets are distributed along at least two substantially circular paths in said rotor disk; and wherein said plurality of pole pieces and coils in each of said stator subassemblies are distributed along said mounting plate in a corresponding manner to said plurality of permanent magnets.

6. The invention of claim 5 wherein adjacent magnets along each of said at least two substantially circular paths are arranged with opposite magnetic polarities; and wherein adjacent magnets in adjacent paths are arranged with opposite magnetic polarities.

7. The invention of claim 5 wherein said rotor disk has a surface; and wherein said permanent magnets are adhered to said surface.

8. The invention of claim 5 1 wherein said disk has a plurality of through apertures formed therein; and wherein said permanent magnets are mounted in associated ones of said plurality of through apertures.

9. The invention of claim 1 wherein said rotor disk has first and second faces; and wherein a first subplurality of said plurality of permanent magnets is distributed along an essentially circular path on said first face, and a second subplurality of said plurality of permanent magnets is distributed along an essentially circular path on said second face.

10. The invention of claim 9 wherein said magnets in said first subplurality are aligned with magnets in said second subplurality; wherein adjacent magnets along said essentially circular path on each of said faces are arranged with opposite magnetic polarities; and wherein aligned magnets in said first and second subplurality are arranged with additive magnetic polarities.

11. The invention of claim 9 wherein said permanent magnets are adhered to said first and second faces.

12. The invention of claim 9 wherein said disk has a plurality of through apertures formed therein; and wherein said permanent magnets are mounted in associated ones of said plurality of through apertures.

13. The invention of claim 1 further including a plurality of rotor disks and pairs of stator sub-assemblies mutually spaced in a lateral direction.

14. The invention of claim 1 further including a support member for said vehicle motor, at least one bearing element for rotatably supporting said rotor disk on said support member; and wherein each said mounting plate is secured to said support member to prevent rotation of each of said stator sub-assemblies on said support member.

15. The invention of claim 1 further including a motor enclosure having a pair of laterally spaced end walls and an enclosure wall extending between said end walls for enclosing said rotor disk and said stator sub-assemblies, said rotor disk being attached to said enclosure.

16. The invention of claim 15 further including a support member for said vehicle motor, a plurality of bearing elements for rotatably supporting said rotor disk and said end walls on said support member; and wherein each said mounting plate is secured to said support member to prevent rotation of each of said stator sub-assemblies on said support member.

17. The invention of claim 1 wherein said motor is attached to a wheel of a vehicle.

18. The invention of claim 17 wherein said vehicle is an automobile.

19. The invention of claim 17 wherein said vehicle is a bicycle.

20. The invention of claim 17 wherein said vehicle is a motorcycle.
